# EUROPEAN PATENT APPLICATION

(11) **EP 4 811 523 A1**
(43) Date of publication of application: **23.09.2026**
(21) Application number: 25758577.8
(22) Date of filing: 17.02.2025
(51) Int. Cl.: H01M 50/291, H01M 10/6567, H01M 10/613, H01M 10/6568, H01M 50/178, H01M 50/502, H01M 50/264, H01M 50/24

(54) **BATTERY CELL ASSEMBLY AND BATTERY PACK INCLUDING SAME**

(30) Priority: 20.02.2024 KR 20240024297; 14.02.2025 KR 20250019169
(71) Applicant: LG Energy Solution, Ltd., Seoul 07335 (KR)
(72) Inventor: LEE, Jung Hoon, Daejeon 34122 (KR); UM, Taeki, Daejeon 34122 (KR)
(74) Representative: Plasseraud IP
(86) International application number: PCT/KR2025/002257
(87) International publication number: WO 2025/178331

(57) **Abstract**

A battery cell assembly according to certain aspects of the present disclosure comprises: a battery cell stack including a first battery cell stack and a second battery cell stack in which a plurality of battery cells are stacked respectively; a frame member that houses the battery cell stack; and an inlet and an outlet that circulate a coolant into the frame member, wherein the coolant is flowed into the frame member through the inlet and discharged through the outlet, wherein the frame member includes an intermediate plate arranged between the first battery cell stack and the second battery cell stack, and wherein the intermediate plate is formed with at least one opening through which the coolant passes.

## Description

### [TECHNICAL FIELD]

### Cross-Reference to Related Application(s)

This application claims priority to and the benefit of Korean Patent Application no. KR10-2024-0024297, filed on February 20, 2024, and Korean Patent Application no. KR10-2025-0019169, filed on February 14, 2025, the entire contents of which are incorporated herein by reference.

The present disclosure relates to a battery cell assembly and a battery pack including the same, and more particularly, to a battery cell assembly that is improved in cooling efficiency and safety, suppresses a displacement amount with respect to a central part of a frame member, and more simplifies the fixing structure of a battery cell stack within a frame member, and a battery pack including the same.

### [BACKGROUND ART]

As mobile devices have been increasingly developed, and the demand for such mobile devices has increased, the demand for secondary batteries as energy sources is also rapidly increasing. Accordingly, much research on secondary batteries satisfying various needs has been carried out.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series/parallel to configure a battery pack, it is common to configure a battery module composed of at least one battery cell first and then configure a battery pack by using at least one battery module and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, a battery module in which a large number of battery cells are stacked, and a battery pack equipped with such battery modules can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since a plurality of battery modules are concentratedly disposed to increase the mileage of the vehicle, the flame or heat generated in one battery module can easily propagate to an adjacent battery module, which may eventually lead to ignition or explosion of the battery pack itself.

Furthermore, since the battery pack consists of a structure in which a plurality of battery modules are combined, it is heavy and unsuitable for loading a plurality of batteries into a means of transportation such as an automobile, and therefore it is necessary to improve the energy density.

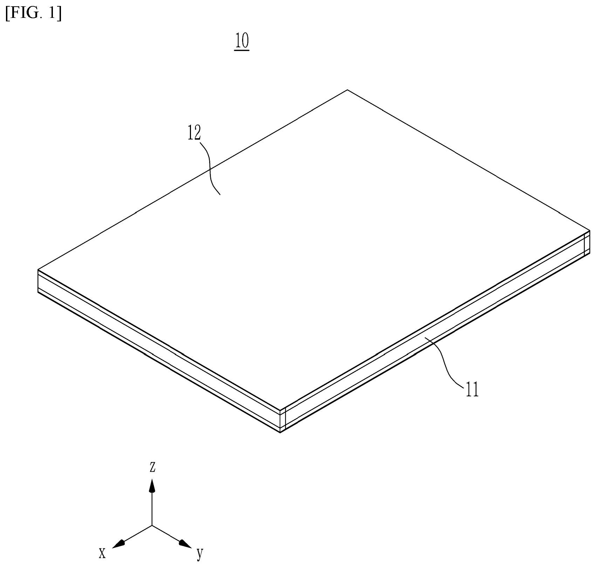

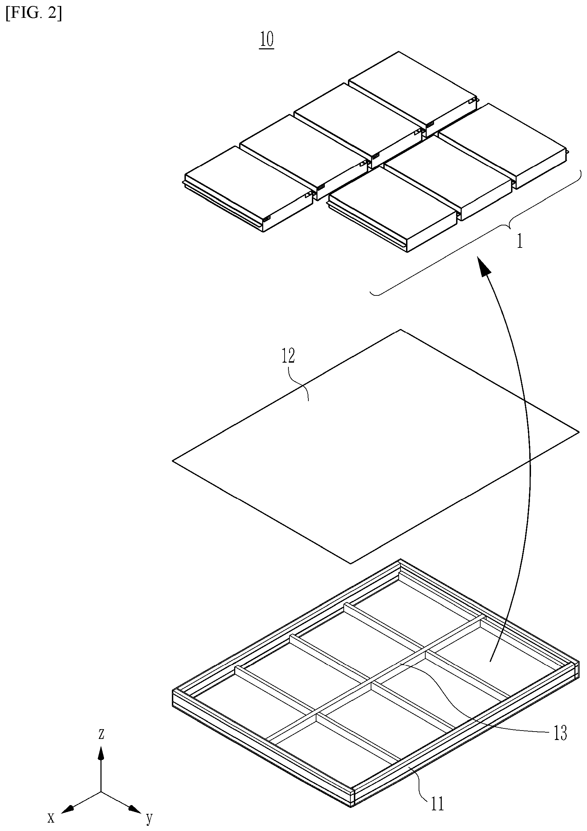

FIG. 1 is a perspective view showing a conventional battery pack. FIG. 2 is an exploded perspective view of the battery pack of FIG. 1.

Referring to FIGS. 1 and 2, a conventional battery pack 10 includes a lower pack frame 11on which a plurality of battery modules 1 are mounted, an upper pack frame 12 located in an upper part of the battery modules 1, and an internal beam 13 that partitions the position where the battery modules 1 are mounted within the battery pack 10.

In this way, when a battery module 1 is mounted in a battery pack 10, the energy density of the battery pack 10 decreases due to the internal beam 13 that partitions between the battery modules 1, and so there is a problem in that more battery packs 10 must be provided in order to satisfy the efficiency required for the device or the like. Furthermore, due to the weight of the battery pack 10, there is a limit to the number of battery packs 10 that can be provided in a device. Therefore, in order to reduce the weight of the battery pack 10, and at the same time increase the energy density of the battery pack 10, it is necessary to mount more battery modules 1 in the battery pack 10.

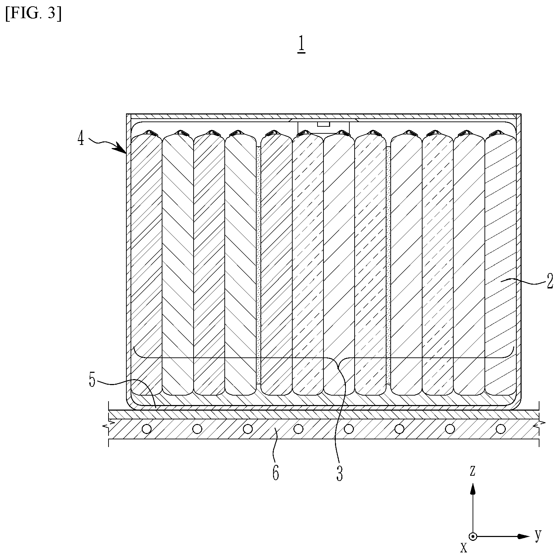

FIG. 3 is a cross-sectional view showing a cross section of one of the battery modules included in the battery pack of FIG. 2.

Referring to FIG. 3, a conventional battery module 1 includes a battery cell stack 3 including battery cells 2 stacked in a preset direction, and a module frame 4 that houses the battery cell stack 3, wherein the battery cell stack 3 is fixedly located on a thermally conductive resin layer 5 located on the lower surface of the module frame 4. In this case, a heat sink 6 located under the bottom part of the module frame 4 may be provided to cool the heat generated from the battery cell stack 3.

However, since the heat sink 6 does not receive transfer of heat while directly contacting the battery cell stack 3, there is a disadvantage in that the cooling efficiency is not very high. In particular, an air gap may be formed between the bottom part of the module frame 4 and the thermally conductive resin layer 5, which becomes a factor that obstructs heat transfer. Thus, it is necessary to more effectively cool the battery module 1.

Putting the above contents together, a more effective method for improving the cooling efficiency of a battery module is needed.

### [DETAILED DESCRIPTION OF THE INVENTION]

### [Technical Problem]

Therefore, it is an object of the present disclosure to provide a battery cell assembly that is improved in cooling efficiency and safety, suppresses a displacement amount with respect to a central part of a frame member, and more simplifies the fixing structure of a battery cell stack within a frame member, and a battery pack including the same.

However, the technical objects to be achieved by embodiments of the present disclosure are not limited to the above-described objects, and other objects which are not mentioned herein should be clearly understood by those skilled in the art from the following detailed description and the accompanying drawing.

### [Technical Solution]

According to a related aspect of the present disclosure, there is provided a battery cell assembly comprising: a battery cell stack including a first battery cell stack and a second battery cell stack in which a plurality of battery cells are stacked respectively; a frame member that houses the battery cell stack; and an inlet and an outlet that circulate a coolant into the frame member, wherein the coolant is flowed into the frame member through the inlet and discharged through the outlet, wherein the frame member includes an intermediate plate arranged between the first battery cell stack and the second battery cell stack, and wherein the intermediate plate is formed with at least one opening through which the coolant passes.

An adhesive layer may be formed on the front and rear surfaces of the intermediate plate, respectively, and the first battery cell stack and the second battery cell stack may be fixed to the inside of the frame member through the adhesive layer respectively.

A first busbar assembly may be arranged on front and rear surfaces of the first battery cell stack, respectively, a second busbar assembly may be arranged on front and rear surfaces of the second battery cell stack, respectively, and the first busbar assembly and the second busbar assembly facing the intermediate plate may be in contact with the adhesive layer, respectively.

The intermediate plate may be integrated with the frame member.

The intermediate plate may be formed in the center of the frame member.

The at least one opening may be formed in the center of the intermediate plate.

The adhesive layer may be made of an adhesive composition having insulation properties, and the adhesive composition may include an epoxy resin or polyurethane.

The inlet and the outlet may be located on opposite sides to each other based on the intermediate plate, the first battery cell stack may be located between the inlet and the intermediate plate, and the second battery cell stack may be located between the outlet and the intermediate plate.

The coolant flowing in through the inlet may pass through the first battery cell stack, the opening of the intermediate plate and the second battery cell stack in sequence, and be discharged through the outlet.

The inlet may be located lower than the center based on the height of the battery cell stack, and the outlet may be located higher than the center based on the height of the battery cell stack.

The first battery cell stack and the second battery cell stack may be arranged along a direction perpendicular to a direction in which the battery cells are stacked in the first battery cell stack or the second battery cell stack.

The battery cell assembly may further comprise a first sealing assembly and a second sealing assembly covering opened both sides of the frame member respectively, and the inlet may be formed in the first sealing assembly, and the outlet is formed in the second sealing assembly.

The inlet may be located lower than the center based on the height of the first sealing assembly, and the outlet may be located higher than the center based on the height of the second sealing assembly.

Each of the battery cells includes electrode leads protruding in both directions, and when the direction between the electrode leads is defined as a longitudinal direction, the first sealing assembly, the first battery cell stack, the intermediate plate, the second battery cell stack, and the second sealing assembly may be sequentially located along the longitudinal direction.

The coolant is an insulating oil, and the coolant may be in direct contact with the battery cell stack housed inside the frame member.

According to a further aspect of the present disclosure, there is provided a battery pack comprising the above-described battery cell assembly.

### [Advantageous Effects]

According to certain embodiments, the battery cell assembly of the present disclosure and the battery pack including the same can increase their cooling efficiency by directly cooling the battery cells with the coolant.

Also, a plurality of battery cell stacks can be arranged along the longitudinal direction within the battery cell assembly to thereby increase the energy density, and an intermediate plate formed with an opening can be arranged between the plurality of battery cell stacks to thereby improve the fluidity of the coolant.

In addition, the intermediate plate can be located inside the frame member to effectively suppress a displacement amount with respect to a central part of a battery cell assembly, and also the battery cell stack can be fixed to the adhesive layer formed on the intermediate plate to more simplify the fixing structure of a battery cell stack within a frame member.

The effects of the present disclosure are not limited to the effects mentioned above, and additional other effects not mentioned above will be clearly understood from the detailed description and the appended claims by those skilled in the art.

### [BRIEF DESCRIPTION OF THE DRAWINGS]

FIG. 1 is a perspective view showing a conventional battery pack.
FIG. 2 is an exploded perspective view of the battery pack of FIG. 1.
FIG. 3 is a cross-sectional view showing a cross section of one of the battery modules included in the battery pack of FIG. 2.
FIG. 4 is a perspective view of a battery cell assembly according to certain embodiments of the present disclosure.
FIG. 5 is an exploded perspective view of the battery cell assembly of FIG. 4.
FIG. 6 is a perspective view showing a frame member included in the battery cell assembly of FIG. 5.
FIG. 7 is a cross-sectional view taken along the a-a' axis of FIG. 6, showing an intermediate plate located inside the frame member of FIG. 5.
FIG. 8 is a cross-sectional view showing an adhesive layer formed on one surface of the intermediate plate of FIG. 7.
FIG. 9 is a perspective view showing a battery cell stack, a first busbar assembly and a second busbar assembly included in the battery cell assembly of FIG. 5.
FIG. 10 is a plan view showing one of the battery cells included in the battery cell stack of FIG. 9.
FIG. 11 is a perspective view showing a first battery cell stack and a first busbar assembly included in the battery cell assembly of FIG. 5.
FIG. 12 is an exploded perspective view of the first battery cell stack and the first busbar assembly of FIG. 11.
FIG. 13 is a perspective view showing a state in which side plates are further arranged on the battery cell stack, the first busbar assembly and the second busbar assembly of FIG. 9.
FIG. 14 is an exploded perspective view showing a state in which the first battery cell stack and the second battery cell stack included in the battery cell stack of FIG. 13 are separated from each other.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

A battery cell assembly 100 according to certain embodiments of the present disclosure will be described below.

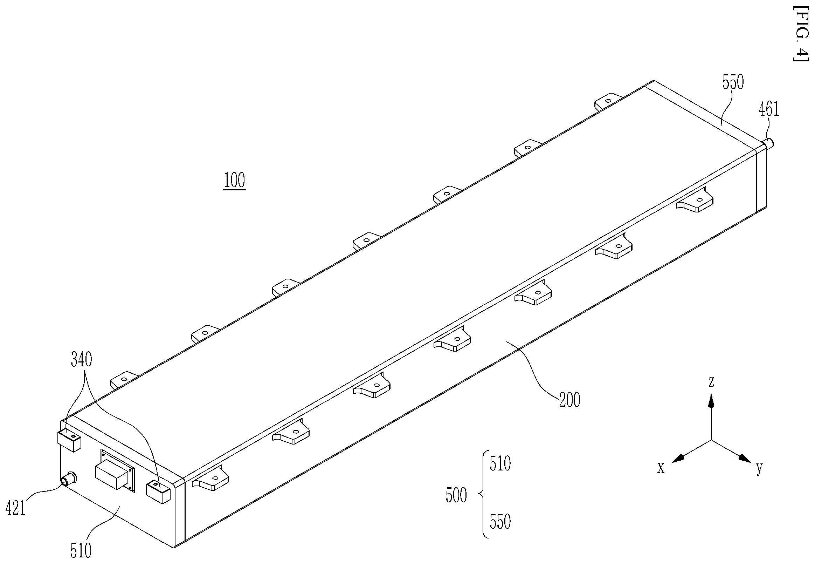

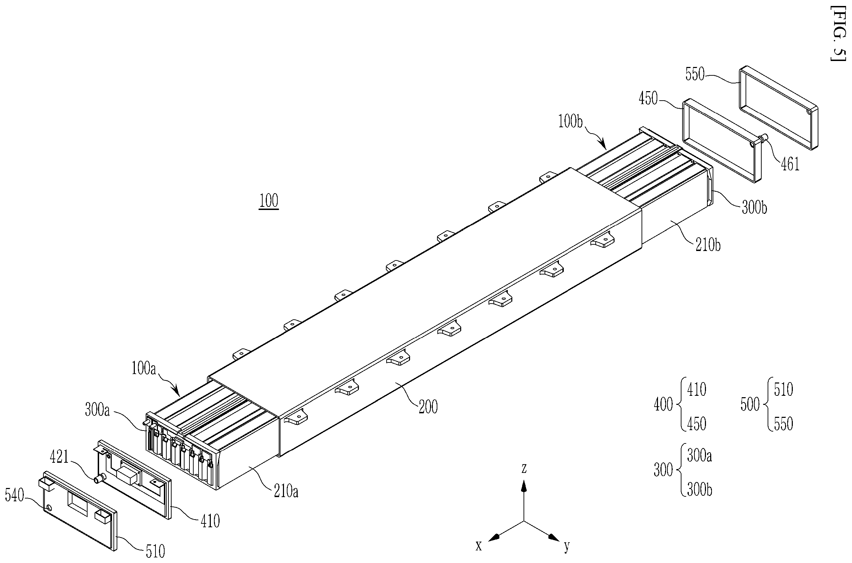

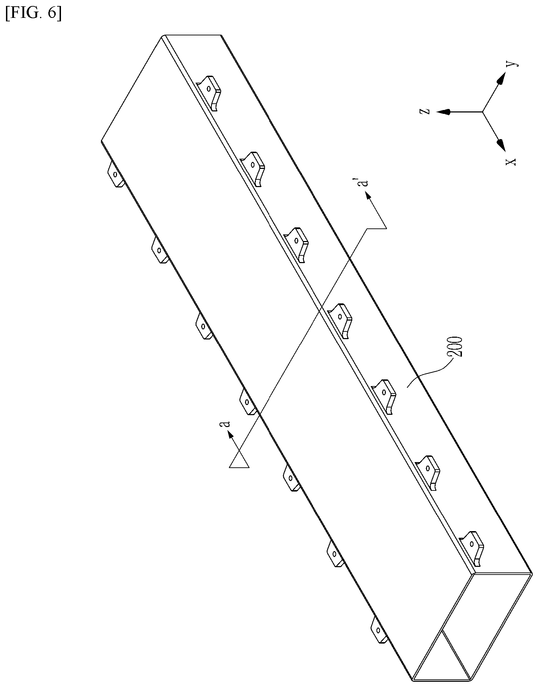

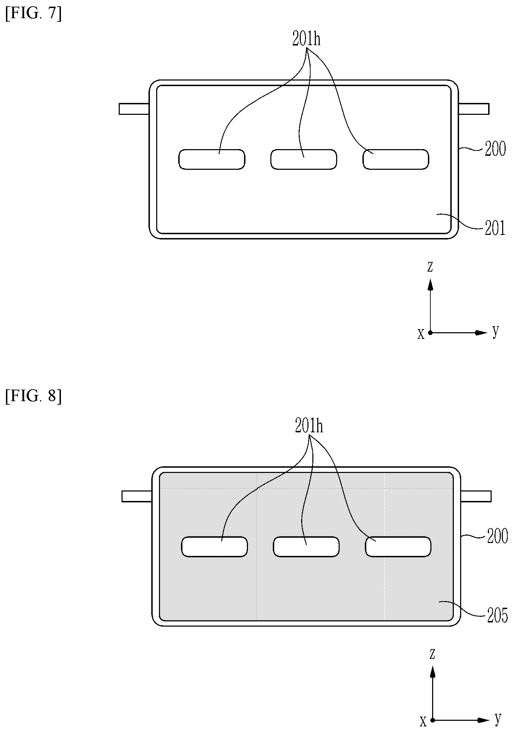

FIG. 4 is a perspective view of a battery cell assembly according to certain embodiments of the present disclosure. FIG. 5 is an exploded perspective view of the battery cell assembly of FIG. 4. FIG. 6 is a perspective view showing a frame member included in the battery cell assembly of FIG. 5. FIG. 7 is a cross-sectional view taken along the a-a' axis of FIG. 6, showing an intermediate plate located inside the frame member of FIG. 5. FIG. 8 is a cross-sectional view showing an adhesive layer formed on one surface of the intermediate plate of FIG. 7.

Referring to FIGS. 4 and 5, a battery cell assembly 100 according to certain embodiments of the present disclosure comprises a battery cell stack 120 including a first battery cell stack 120a and a second battery cell stack 120b; a frame member 200 that houses the battery cell stack 120; and an inlet 421 and an outlet 461 for circulating a coolant within the frame member 200. The first battery cell stack 120a and the second battery cell stack 120b are formed by stacking a plurality of battery cells 110. The coolant, the inlet 421 and the outlet 461 will be described later.

Referring to FIGS. 4 to 6, the frame member 200 may be intended to protect the battery cell stack 120 and electrical components connected thereto from external physical impact. The battery cell stack 120 and electrical components connected thereto may be housed in the internal space of the frame member 200.

The structure of the frame member 200 may have various shapes. According to certain embodiments of the present disclosure, the structure of the frame member 200 may be a mono-frame structure. Here, the mono-frame may be constituted by integrating the upper surface, lower surface and both side surface together. In one embodiment, the mono-frame may be manufactured by extrusion molding.

The frame member 200 may have the form opened on both sides. More specifically, the frame member 200 may be provided in the form opened along a longitudinal direction of the battery cell 110. In this case, the front surface and the rear surface of the battery cell stack 120 may not be covered by the frame member 200. The front surface and the rear surface of the battery cell stack 120 may be covered by the first and second busbar assemblies 300a and 300b, the sealing assembly 400, the end plate 500 or the like described below, through which the front surface and rear surface of the battery cell stack 120 may be protected from external physical impact or the like.

Referring to FIGS. 6 and 7, in the battery cell assembly 100 according to the present embodiments, the frame member 200 may include an intermediate plate 201 arranged between the first battery cell stack 120a and the second battery cell stack 120b. The intermediate plate 201 is formed with at least one opening 201h through which the coolant passes. The opening 201h of the intermediate plate 201 will be described later together with the coolant, the inlet 421 and the outlet 461.

The intermediate plate 201 may be located between the first battery cell stack 120a and the second battery cell stack 120b inside the frame member 200. That is, the intermediate plate 201 may partition between the first battery cell stack 120a and the second battery cell stack 120b inside the frame member 200. In other words, the intermediate plate 201 may be formed in the center of the frame member 200.

The intermediate plate 201 may be integrated with the frame member 200. In other words, the intermediate plate 201 may be constituted by integrating the upper surface, lower surface, and both side surfaces of the frame member 200 together. That is, the intermediate plate 201 can be manufactured by injection molding together with the upper surface, lower surface, and both side surfaces of the frame member 200. In one embodiment, both the frame member 200 and the intermediate plate 201 may be made of a resin material. However, the material of the frame member 200 and the intermediate plate 201 is not limited thereto, and can be included in the present embodiments as long as it is a material capable of being manufactured by injection molding while having sufficient rigidity.

Thus, in the battery cell assembly 100 according to the present embodiments, the intermediate plate 201 is integrated into the frame member 200, and thus it is not necessary to further insert a separate plate that partitions between the first battery cell stack 120a and the second battery cell stack 120b, which may be advantageous in simplifying assembly and reducing cost.

In addition, in the battery cell assembly 100 according to the present embodiments, the intermediate plate 201 can supplement the rigidity of the central part of the frame member 200, and thus suppress displacement due to internal hydraulic pressure generated by an insulating oil that circulates inside the frame member 200.

In particular, the battery cell assembly 100 according to the present embodiments has a structure in which a plurality of battery cell stacks 120a and 120b are arranged along the longitudinal direction of the battery cell assembly 100, in this respect, as the length of the battery cell assembly 100 becomes relatively longer, the displacement amount of the central part of the battery cell assembly 100 may also increase relatively.

At this time, the battery cell assembly 100 of the present embodiments has a structure in which an intermediate plate 201 is integrated in the central part of the frame member 200, which makes it possible to suppress the displacement amount increased in the central part of the battery cell assembly 100 without requiring an additional space to arrange a separate component for suppressing the amount of displacement at the central part of the battery cell assembly 100, and can effectively prevent damage to the components and leakage of insulating oil due to the increase in the displacement amount.

In addition, the intermediate plate 201 is manufactured so as to be integrated into the frame member 200 according to the injection molding method as described above, so that the intermediate plate 201 can also have insulation properties on its own while having sufficient rigidity.

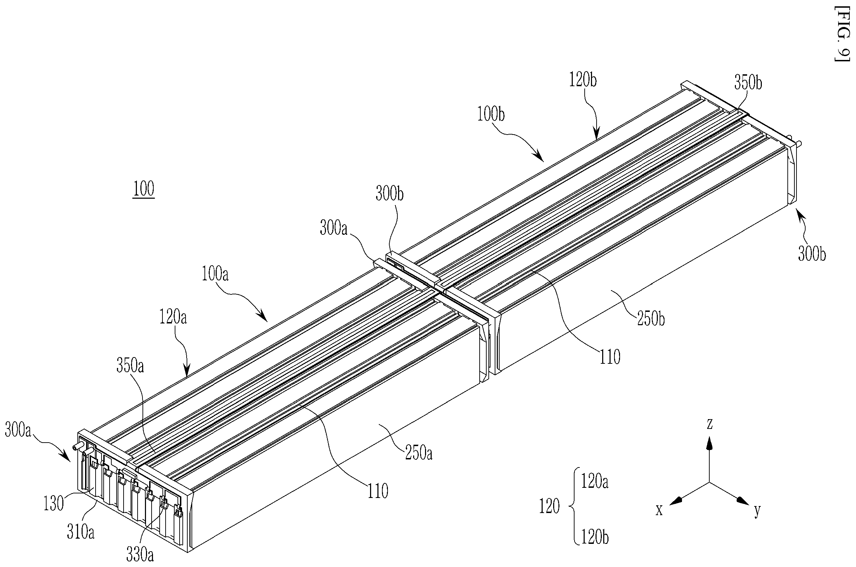

Thus, in the battery cell assembly 100 according to the present embodiments, the intermediate plate 201 is located between the first battery cell stack 120a and the second battery cell stack 120b, thereby being able to secure electrical insulation properties and creepage distance between the first battery cell stack 120a and the second battery cell stack 120b, or between the first busbar assembly 300a (FIG. 9) and the second busbar assembly 300b (FIG. 9).

In addition, the battery cell assembly 100 according to the present embodiments does not include a separate through hole for electrical connection between the first battery cell stack 120a and the second battery cell stack 120b in the intermediate plate 201, and may have no electrical connection between the first battery cell stack 120a and the second battery cell stack 120b. That is, in the battery cell assembly 100 according to the present embodiments, the first battery cell stack 120a and the second battery cell stack 120b may be electrically connected to external electrical components individually. In other words, in the battery cell assembly 100 of the present embodiments, the HV connection and the LV connection in the first battery cell stack 120a can be formed independently of the second battery cell stack 120b, and similarly, the HV connection and the LV connection in the second battery cell stack 120b can be formed independently of the first battery cell stack 120a.

However, without being limited thereto, unlike those shown in FIGS. 7 and 8, since a separate through hole is formed in the intermediate plate 201, such electrical connection between the first battery cell stack 120a and the second battery cell stack 120b can be made through the through hole.

Referring to FIGS. 6 to 8, in the battery cell assembly 100 according to the present embodiments, an adhesive layer 205 may be formed on the front and rear surfaces of the intermediate plate 201, respectively. Here, the adhesive layer 205 may be formed on the whole of the front and back surfaces of the intermediate plate 201. More specifically, the adhesive layer 205 may be formed on the entire remaining surface of the intermediate plate 201 except for the opening 201h, which will be described later.

In one embodiment, in a state where the adhesive layer 205 is adhered to the first battery cell stack 120a and the second battery cell stack 120b, respectively, or in a state where the adhesive layer 205 is adhered to the first busbar assembly 300a and the second busbar assembly 300b, respectively, the thickness of the adhesive layer 205 formed on the front and back surfaces of the intermediate plate 201 may be 0.1T or more to 0.2T or less, or 0.1mm or more to 0.2mm or less.

However, the thickness of the adhesive layer 205 is not limited thereto, and can be included in the present embodiment as long as it is a thickness that can stably maintain the state where the adhesive layer 205 is adhered to the first battery cell stack 120a and the second battery cell stack 120b, respectively, or the state where the adhesive layer 205 is adhered to the first busbar assembly 300a and the second busbar assembly 300b, respectively

Here, the adhesive layer 205 can be made of an adhesive composition having insulation properties. In one embodiment, the adhesive layer 205 can be made of a composition including an epoxy resin or polyurethane (PUR, PU).

Thus, in the battery cell assembly 100 according to the present embodiments, an adhesive layer 205 having insulation properties is formed on the front and rear surfaces of the intermediate plate 201, so that electrical insulation properties and creepage distance can be further secured between the first battery cell stack 120a and the second battery cell stack 120b, or between the first busbar assembly 300a (FIG. 9) and the second busbar assembly 300b (FIG. 9).

Furthermore, in the battery cell assembly 100 according to the present embodiments, the first battery cell stack 120a and the second battery cell stack 120b can be each fixed to the inside of the frame member 200 through the adhesive layer 205. More specifically, as described below, a first busbar assembly 300a (FIG. 9) may be arranged on the front and rear surfaces of the first battery cell stack 120a, and a second busbar assembly 300b (FIG. 9) may be arranged on the front and rear surfaces of the second battery cell stack 120b. Here, the first busbar assembly 300a and the second busbar assembly 300b facing the intermediate plate 201 may be in contact with the adhesive layer 205, respectively.

Thus, in the battery cell assembly 100 according to the present embodiments, the first battery cell stack 120a and the second battery cell stack 120b can be stably fixed inside the frame member 200, and it is not necessary to include a separate bolting joint or other bonding structure for fixing the first battery cell stack 120a and the second battery cell stack 120b inside the frame member 200, which may be advantageous in simplifying assembly and reducing cost.

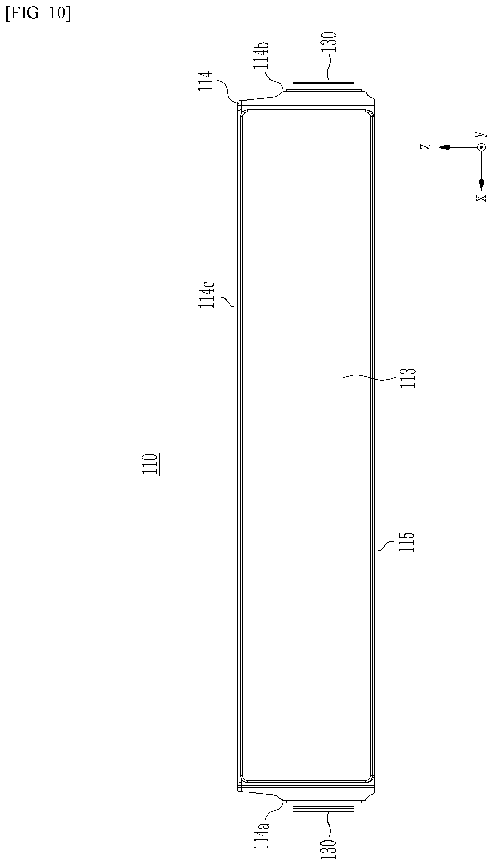

FIG. 9 is a perspective view showing a battery cell stack, a first busbar assembly and a second busbar assembly included in the battery cell assembly of FIG. 5. FIG. 10 is a plan view showing one of the battery cells included in the battery cell stack of FIG. 9.

Referring to FIGS. 4, 5, 9 and 10, the battery cell 110 is a pouch-type battery cell, and may include electrode leads 130 protruding in both directions. The pouch-type battery cell may be formed by housing an electrode assembly in a pouch case made of a laminate sheet including a resin layer and a metal layer, and then adhering the outer peripheral part of the pouch case. Such a battery cell 110 may have a rectangular sheet structure. Specifically, the battery cell 110 according to the present embodiments has a structure in which two electrode leads 130 protrude from one end 114a and the other end 114b of the battery main body 113, respectively. More specifically, the electrode leads 130 may protrude in opposite directions to each other, and one of such electrode leads 130 may be a positive electrode lead and the other may be a negative electrode lead. In the present embodiments, the direction between the electrode leads 130 protruding in both directions of the battery cell 110 is referred to as a longitudinal direction of the battery cell 110. In one embodiment, referring to FIGS. 9 and 10, the direction parallel to the x-axis may correspond to a longitudinal direction of the battery cell 110.

The battery cells 110 can be produced by adhering both end parts 114a and 114b of a cell case 114 and one side part 114c connecting them in a state in which an electrode assembly (not shown) is housed in a cell case 114. In other words, the battery cell 110 according to certain embodiments of the present disclosure has a total of three sealing portions, wherein the sealing portions have a structure that is sealed by a method such as fusion, and the remaining other one side part may be composed of a folding portion 115.

Such battery cells 110 may be formed in a plurality of numbers, and the plurality of battery cells 110 may be stacked so as to be electrically connected to each other, thereby forming a battery cell stack 120. The battery cell stack 120 includes a first battery cell stack 120a and a second battery cell stack 120b. In particular, the battery cells 110 may be stacked along one direction while being kept upright, in a state where one-side surfaces of the battery main body 113 of the battery cells 110 face each other. More specifically, as shown in FIGS. 5, 9 and 10, the battery cells 110 may be stacked in a direction from one side to the other side of the side surface parts of the frame member 200 under an upright condition so that one surface of the battery main body 113 of the battery cells 110 is parallel to the side surface parts of the frame member 200. In one embodiment, a state in which a plurality of battery cells 110 are stacked along a direction parallel to the y-axis is depicted. When the plurality of battery cells 110 are stacked along a direction parallel to the y-axis in this manner, the electrode leads 130 in one battery cell 110 can protrude along the x-axis direction and the -x-axis direction, respectively.

In one region, a plurality of battery cells 110 may be stacked along a direction parallel to the y-axis to form a first battery cell stack 120a, and in the other region, a plurality of battery cells 110 may be stacked along a direction parallel to the y-axis to form a second battery cell stack 120b.

The cell case 114 is generally formed in a laminated structure of resin layer/metal thin film layer/resin layer. For example, when the surface of the cell case is formed of an O (oriented)-nylon layer, it tends to slide easily due to external impact when stacking a plurality of battery cells to form a medium- or large-sized battery module. Therefore, in order to prevent this problem and maintain a stable stacked structure of battery cells, a tacky adhesive such as a double-sided tape or a chemical adhesive that bonds through chemical reactions during adhesion can be attached to the surface of the battery cell case to form a first battery cell stack 120a and a second battery cell stack 120b.

Meanwhile, the first battery cell stack 120a and the second battery cell stack 120b are arranged along a direction perpendicular to the direction in which the battery cells 110 are stacked in the first battery cell stack 120a or the second battery cell stack 120b. In other words, the first battery cell stack 120a and the second battery cell stack 120b may be arranged along the direction in which the electrode leads 130 protrude based on the battery cell 110. That is, the first battery cell stack 120a and the second battery cell stack 120b are arranged along the longitudinal direction of the battery cell 110. For example, as shown in FIG. 10, when a plurality of battery cells 110 are stacked along a direction parallel to the y-axis to form a first battery cell stack 120a and a second battery cell stack 120b, the first battery cell stack 120a and the second battery cell stack 120b may be located along a direction parallel to the x-axis.

Referring to FIGS. 5 and 9, the battery cell assembly 100 according to the present embodiments may include first busbar assemblies 300a located on each of the front and rear surfaces of the first battery cell stack 120a, and second busbar assemblies 300b located on each of the front and rear surfaces of the second battery cell stack 120b. Specifically, the first busbar assemblies 300a may be located in a direction in which the electrode leads 130 of the battery cells 110 included in the first battery cell stack 120a protrude. Further, the second busbar assemblies 300b may be located in a direction in which the electrode leads 130 of the battery cells 110 included in the second battery cell stack 120b protrude. The first busbar assembly 300a and the second busbar assembly 300b may each include a busbar frame, a busbar, and a terminal busbar, which will be described later.

Referring to FIGS. 5 and 9, the battery cell assembly 100 according to the present embodiments may include a sealing assembly 400. The sealing assembly 400 may be formed to be located on opened both sides of the frame member 200 and cover the battery cell stack 120. The sealing assembly 400 located on opened one side of the frame member 200 may be a first sealing assembly 410, and the sealing assembly 400 located on opened other side of the frame member 200 may be a second sealing assembly 450. That is, the battery cell assembly 100 according to the present embodiments may further include a first sealing assembly 410 and a second sealing assembly 450 that cover each of the opened both sides of the frame member 200.

The sealing assembly 400 may separate the opened both sides of the frame member 200 from the external environment. Specifically, when the coolant is injected into the frame member 200, the sealing assembly 400 can perform the role of sealing the coolant so that it does not leak to the outside.

Referring to FIGS. 4, 5 and 9, the battery cell assembly 100 according to the present embodiments may include an end plate 500. The end plate 500 may be formed to be located on opened both sides of the frame member 200 and cover the sealing assembly 400. The end plate 500 located on opened one side of the frame member 200 may be a first end plate 510, and the end plate 500 located on the opened other side of the frame member 200 may be a second end plate 550.

The end plate 500 can physically protect the battery cell stack 120 and other electrical components from external impact.

Next, the components included in the battery cell assembly 100 of the present embodiments will be described in detail.

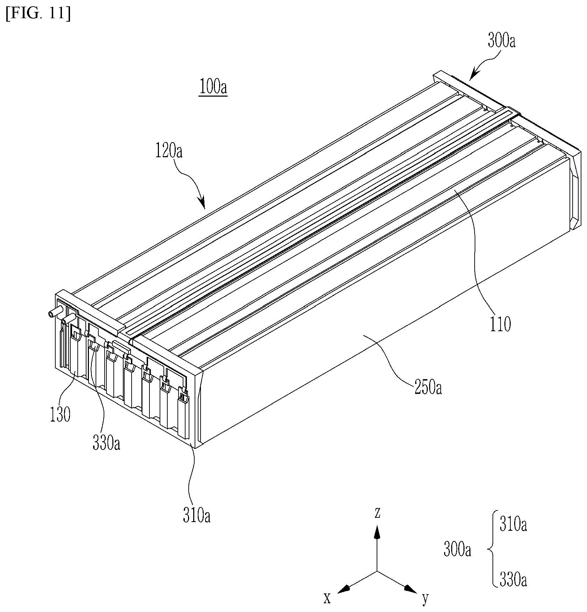

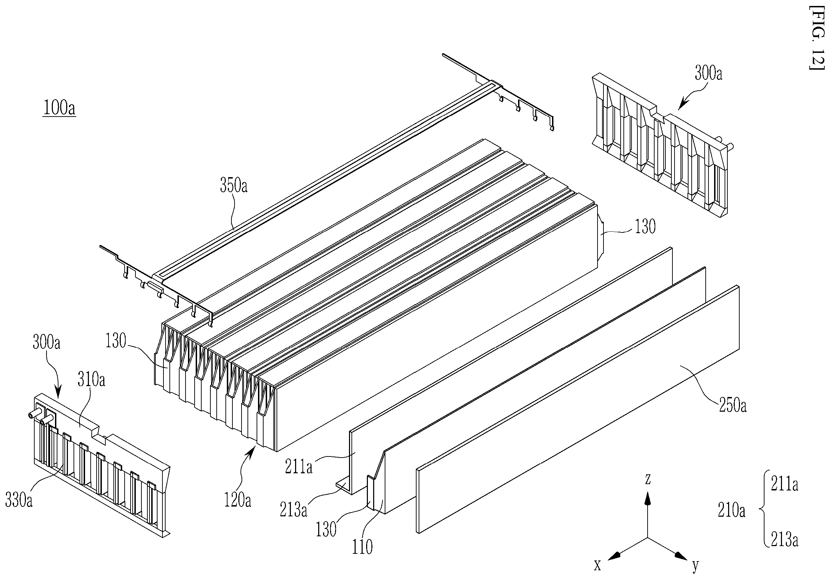

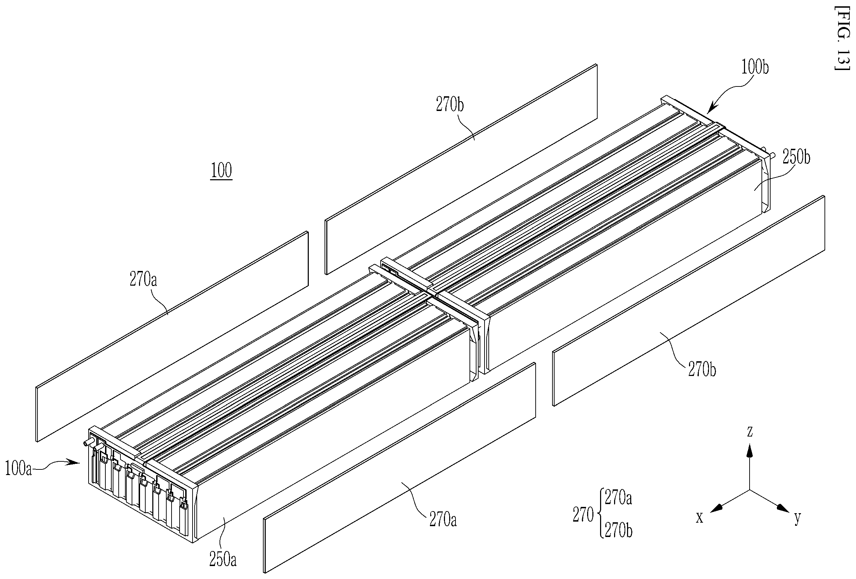

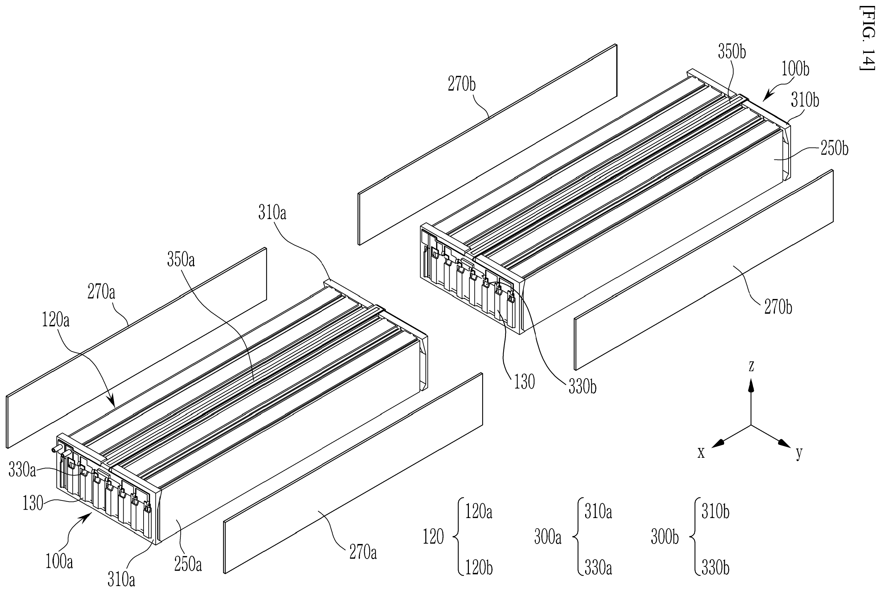

FIG. 11 is a perspective view showing a first battery cell stack and a first busbar assembly included in the battery cell assembly of FIG. 5. FIG. 12 is an exploded perspective view of the first battery cell stack and the first busbar assembly of FIG. 11. FIG. 13 is a perspective view showing a state in which side plates are further arranged on the battery cell stack, the first busbar assembly and the second busbar assembly of FIG. 9. FIG. 14 is an exploded perspective view showing a state in which the first battery cell stack and the second battery cell stack included in the battery cell stack of FIG. 13 are separated from each other.

Referring to FIGS. 5, 9, 13, and 14 together, the battery cell stack 120 may include a first battery cell stack 120a and a second battery cell stack 120b that are arranged along the longitudinal direction of the battery cell 110, as described above. Also, first busbar assemblies 300a may be located on each of the front and rear surfaces of the first battery cell stack 120a, and second busbar assemblies 300b may be located on each of the front and rear surfaces of the second battery cell stack 120b.

In this case, the first battery cell stack 120a and the first busbar assembly 300a may be collectively referred to as a first sub-assembly 100a, and the second battery cell stack 120b and the second busbar assembly 300b may be collectively referred to as a second sub-assembly 100b. Specifically, the battery cell assembly 100 according to the present embodiments may be one in which the first sub-assembly 100a and the second sub-assembly 100b arranged inside the frame member 200 are electrically coupled to each other, or may be separately mounted inside the frame member 200. That is, the battery cell assembly 100 according to the present embodiments corresponds to a twin-model battery cell assembly having the first sub-assembly 100a and the second sub-assembly 100b.

Referring to FIGS. 11 and 12, the first sub-assembly 100a may include a first battery cell stack 120a and a first busbar assembly 300a. The first busbar assemblies 300a may be located on each of the front and rear surfaces of the first battery cell stack 120a. The first busbar assemblies 300a may be located in a direction in which the electrode leads 130 of the battery cells 110 included in the first battery cell stack 120a protrude. In addition, a first flexible printed circuit board (FPCB) 350a electrically connected to the first busbar assemblies 300a may be provided.

The first battery cell stack 120a may include a plurality of battery cells 110, at l east one first cooling fin 210a located between the plurality of battery cells 110, and a fi rst compression pad 250a provided on one surface of the battery cell 110 located on the outermost side among the battery cells 110. Similarly, the second battery cell stack 120a may include at least one first cooling fin 210b.

The first cooling fin 210a may be located between the plurality of battery cells 110. For example, the first cooling fin 210a may be located between two battery cells 110. Specifically, the other first cooling fin 210a adjacent to one first cooling fin 210a may be located between two battery cells 110.

The first cooling fin 210a may include a first plate 211a that is in contact with one side surface of the battery cell 110. Here, the one side surface of the battery cell 110 may be one surface of the battery main body 113 (FIG. 10) of the battery cell 110, which may be one surface of the battery cell 110 that extends along the longitudinal direction (x-axis direction).

One surface of the first plate 211a may be in contact with one side surface of the battery cell 110 that faces one surface of the first plate 211a. The other surface of the first plate 211a may be in contact with one surface of the other adjacent battery cell 110 that faces the other surface of the first plate 211a. In this case, although not specifically shown in the figure, an adhesive member is interposed between the side surface of the battery cell 110 and the first plate 211a, so that the battery cell 110 and the first plate 211a may be adhesively fixed. For example, the adhesive member may be an insulating tape.

The upper surface (z-axis direction) of the first plate 211a may be in contact with the upper surface of the frame member 200, and the lower surface of the first plate 211a may be in contact with the lower surface of the frame member 200. Therefore, the first cooling fin 210a can be fixedly located within the frame member 200, so that the battery cell 110 adhered to the first cooling fin 210a may also be fixedly located within the frame member 200.

If the size of the first plate 211a is larger than the size of the battery cell 110, the upper part and lower part of the battery cell 110 can be located at certain distances from the upper surface and lower surface of the frame member 200. Specifically, if the height of the first plate 211a is longer than the height of the battery cell 110, the battery cell 110 can be adhesively fixed while being located at the center of the first plate 211a. In this case, the upper part and lower part of the battery cell 110 can be located at certain distances from the upper surface and lower surface of the frame member 200. Here, the height of the battery cell 110 and the first plate 211a means the length in the z-axis direction.

The first cooling fin 210a may further include a first plate 211a and a first protrusion 213a in which one end of the first plate 211a protrudes. In one embodiment, the first cooling fin 210a may have an L shape. Specifically, referring to FIG. 9, the first cooling fin 210a may include a first plate 211a having a surface corresponding to or larger than one side surface of the battery cell 110, and a first protrusion 213a that protrudes from one end of the first plate 211a to be in parallel with the stacking direction (y-axis direction) of the first battery cell stack 120a.

The first protrusion 213a is a region that protrudes in a direction perpendicular to the first plate 211a, and may be in contact with at least one of the upper surface and lower surface of the frame member 200. Specifically, one surface of the first protrusion 213a may be located facing the upper surface or lower surface of the battery cell 110, and the other surface of the first protrusion 213a may be in contact with the lower surface or upper surface of the frame member 200.

For example, one surface of the first protrusion 213a may be located facing the lower surface of the battery cell 110, and the upper surface and lower surface of the battery cell 110 may be located by being adhesively fixed to the first plate 211a while having a certain height from the upper surface and lower surface of the frame member 200. That is, a certain space may be provided between one surface of the first protrusion 213a and the lower surface of the battery cell 110 and between the upper surface of the frame member 200 and the upper surface of the battery cell 110, so that the coolant described below can move between them. In this case, the distance between one surface of the first protrusion 213a and the lower surface of the battery cell 110 may correspond to the distance between the upper surface of the frame member 200 and the upper surface of the battery cell 110.

The other surface of the first protrusion 213a may be in contact with the bottom part of the frame member 200. Specifically, the other surface of the first protrusion 213a may adhesively fixed while being in contact with the bottom part of the frame member 200, so that the first cooling fin 210a can be fixedly located within the frame member 200.

However, the shape of the first cooling fin 210a is not limited to that shown in the figure, and may be the shape of a flat plate, and any shape is available as long as it can fix the battery cell 110 while being in contact with the battery cell 110.

The first cooling fin 210a may be made of metal. Specifically, the first cooling fin 210a may be made of a metal having high thermal conductivity. Therefore, the first cooling fin 210a can directly receive transfer of the heat generated from the battery cell 110 by the charge and discharge of the battery. When heat is generated, primary cooling is performed while heat is transferred to the first cooling fin 210a that is in contact with the side surface of the battery cell 110, and secondary cooling is performed while a coolant that will be described later is in direct contact with the upper part and lower part of the battery cell 110. Thus, conventionally, even with respect to the upper and lower regions of the battery cells which were relatively hard cool, direct cooling is possible and thus, the cooling efficiency can be enhanced.

The first compression pad 250a may be located on the outermost side of the first battery cell stack 120a. When the battery cell 110 swells due to the charge and discharge, the first compression pad 250a can perform the role of absorbing the swelling. Specifically, the first compression pad 250a pushes out the side surface part of the frame member 200 while the battery cells 110 is swelling, thereby preventing the cell case 114 (FIG. 10) of the battery cells 110 from breaking, and improving the safety of the battery cell assembly 100.

However, the first compression pad 250a is not limited to being located only on the outermost side of the first battery cell stack 120a, and can also be located between the battery cells 110 that constitute the first battery cell stack 120a.

The first busbar assembly 300a may include a first busbar frame 310a and a first busbar 330a mounted on the first busbar frame 310a.

The first busbar frame 310a may be located on one surface of the first battery cell stack 120a, and thus can cover one surface of the first battery cell stack 120a and at the same time guide the connection between the first battery cell stack 120a and an external device. The first busbar frame 310a may be located on one surface and the other surface of the first battery cell stack 120a.

The first busbar frame 310a may be mounted with a first busbar 330a. Specifically, for example, the inner surface of the first busbar frame 310a may face the first battery cell stack 120a, and the outer surface of the first busbar frame 310a may be mounted with a first busbar 330a.

The first busbar frame 310a may include an electrically insulating material. The first busbar frame 310a can limit the first busbar 330a from contacting other parts of the battery cells 110 other than the part where the first busbar 330a is joined with an electrode lead (not shown), and can prevent the occurrence of an electrical short circuit.

The first busbar 330a can be mounted on the outer surface of the first busbar frame 310a, electrically connect the battery cells 110 included in the first battery cell stack 120a, and electrically connect the first battery cell stack 120a and an external device circuit. The first busbar 330a is located on the first busbar frame 310a, and the first busbar assembly 300a is covered by the sealing assembly 400 and the end plate 500 described below, so that it can be protected from external impacts and the like, and the deterioration of durability due to external moisture, etc. can be minimized.

The first busbar 330a can be electrically connected to the first battery cell stack 120a through the electrode lead 130 of the battery cell 110. Specifically, the electrode lead 130 of the battery cell 110 can be bent after passing through a slit formed in the first busbar frame 310a, and connected to the first busbar 330a. The battery cells 110 included in the first battery cell stack 120a can be electrically connected in series or in parallel by the first busbar 330a. The connection method between the electrode lead 130 and the first busbar 330a is not particularly limited, and in one embodiment, weld joining may be applied.

The first flexible printed circuit board 350a is mounted to extend in the longitudinal direction of the battery cells 110 and configured to sense the battery cells 110. That is, as shown in FIGS. 11 and 12, the first flexible printed circuit board 350a senses voltage data or thermal data of the battery cells 110 while being located on the upper surface of the first battery cell stack 120a. In particular, the first flexible printed circuit board 350a may be electrically connected to the first busbar 330a while being bent toward the first busbar frame 310a at one end. As a result, the voltage data of each battery cell 110 may be sensed and transmitted to the outside.

The second sub-assembly 100b may include a second battery cell stack 120b and a second busbar assembly 300b, and the second busbar assembly 300b may include a second busbar frame 310b and a second busbar 330b. In addition, a second flexible printed circuit board 350b connecting the second busbar assemblies 300b may be provided.

The second busbar frame 310b may be located on one surface of the second battery cell stack 120b to cover one surface of the second battery cell stack 120b and at the same time guide the connection between the second battery cell stack 120b and an external device. The second busbar frame 310b may be located on one surface and the other surface of the second battery cell stack 120b.

The components included in the second sub-assembly 100b may have structures identical to or similar to the components included in the first sub-assembly 100a described above. Therefore, in order to avoid duplication of explanation, detailed description of the components included in the second sub-assembly 100b will be omitted.

Referring to FIGS. 13 and 14, in the battery cell assembly 100 according to the present embodiments, side plates 270 may be provided on both side surfaces of the first sub-assembly 100a and the second sub-assembly 100b, respectively.

The side plates 270 may be plates extending along the longitudinal direction of the battery cell 110. In one embodiment, the side plates 270 may be metal having rigidity.

More specifically, the side plates 270 may include a first side plate 270a provided on both side surfaces of the first sub-assembly 100a, and a second side plate 270b provided on both side surfaces of the second sub-assembly 100b. Here, the length of the first side plate 270a may correspond to the length of the first sub-assembly 100a, and the length of the second side plate 270b may correspond to the length of the second sub-assembly 100b.

The first side plate 270a may be located facing the battery cell 110 located on the outermost side among the battery cells 110 included in the first sub-assembly 100a, and the second side plate 270b may be located facing the battery cell 110 located on the outermost side among the battery cells 110 included in the second sub-assembly 100b.

Further, the first side plate 270a may be located facing a first compression pad 250a included in the first sub-assembly 100a, and the second side plate 270b may be located facing the second compression pad 250b included in the second sub-assembly 100b.

Thus, in the battery cell assembly 100 according to the present embodiments, the side plate 270 can perform the role of protecting the outermost battery cells 110 or compression pads 250a and 250b of the first sub-assembly 100a and the second sub-assembly 100b when the first sub-assembly 100a and the second sub-assembly 100b are each inserted and mounted in the frame member 200 with the intermediate plate 201 between them.

In addition, the battery cell assembly 100 of the present embodiments is a twin model having a first battery cell stack 120a and a second battery cell stack 120b. Since the battery cell stack 120 is longer than a typical battery cell stack, it may not be easy to insert it into the frame member 200 and assemble it. In this case, as shown in FIGS. 13 and 14, the side plate 270 guides the insertion of the battery cell stack 120 into the frame member 200, so that the battery cell assembly can be easily assembled without damage to the battery cells 110 and the compression pads 250a and 250b.

Next, a structure for circulating a coolant inside the battery cell assembly according to the present embodiments will be described in detail.

Referring again to FIGS. 4, 5 and 7 to 9, the battery cell assembly 100 according to the present embodiments includes an inlet 421 and an outlet 461 for circulating a coolant within the frame member 200. The coolant is flowed into the frame member 200 through the inlet 421 and then discharged to the outside of the battery cell assembly 100 through the outlet 461.

The coolant can be in direct contact with the battery cell stack 120, the first and second busbar assemblies 300a and 300b and other electrical components housed inside the frame member 200, and can receive transfer of the heat generated from them.

The coolant may be a fluid. However, since the coolant is in direct contact with the battery cell stack 120, the first and second busbar assemblies 300a and 300b and other electrical components inside the battery cell assembly 100, the coolant needs to be electrically insulated. Therefore, the coolant may be a material having insulation properties. In one embodiment, the coolant may be an insulating oil.

That is, in the case of the present embodiments, the coolant can be in direct contact with the battery cell stack 120, the first and second busbar assemblies 300a and 300b, and other electrical components that generate heat within the battery cell assembly 100, thereby cooling them while receiving transfer of heat. Therefore, compared to the conventional battery module 1 (see FIG. 3) that indirectly cools the battery module 1 using a heat sink 6 or the like, the battery cell assembly 100 according to the present embodiments can improve the cooling efficiency through direct cooling, thereby extending the battery life.

At this time, in the present embodiments, an intermediate plate 201 is arranged between the first battery cell stack 120a and the second battery cell stack 120b, and at least one opening 201h through which the coolant passes is formed in the intermediate plate 201.

In one embodiment, at least one opening 201h may be formed in the center of the intermediate plate 201, and more specifically, at least one opening 201h may be opened in a rectangular shape in which the upper side and lower side are longer than the both sides. That is, the opening 201h may be opened so as to extend long along a direction in which the battery cells 110 are stacked.

More specifically, the inlet 421 and the outlet 461 may be located on opposite sides to each other based on the intermediate plate 201. A first battery cell stack 120a may be located between the inlet 421 and the intermediate plate 201, and a second battery cell stack 120b may be located between the outlet 461 and the intermediate plate 201.

The coolant flowing in through the inlet 421 may pass through the first battery cell stack 120a, the opening 201h of the intermediate plate 201, and the second battery cell stack 120b in sequence, and be discharged through the outlet 461.

Both the first battery cell stack 120a and the second battery cell stack 120b are included inside one frame member 200, and thus, there is a risk of a short circuit occurring due to contact between the first battery cell stack 120a and the second battery cell stack 120b or between the first busbar assembly 300a located on the other side of the first battery cell stack 120a and the second busbar assembly 300b located on one side of the second battery cell stack 120b.

Further, as described above, the battery cell assembly 100 according to the present embodiments has the form that extends along the longitudinal direction, including the first battery cell stack 120a and the second battery cell stack 120b. When the coolant circulates inside the frame member 200, a section where the flow of the coolant stagnates may occur between the first battery cell stack 120a and the second battery cell stack 120b.

Thus, in the battery cell assembly 100 according to the present embodiments, an intermediate plate 201 in which an adhesive layer 205 having electrical insulation properties is formed on the front and rear surfaces thereof is arranged between the first battery cell stack 120a and the second battery cell stack 120b. The intermediate plate 201 is used to ensure electrical insulation properties and creepage distance between the first battery cell stack 120a and the second battery cell stack 120b, or between the first busbar assembly 300a and the second busbar assembly 300b.

In addition, the intermediate plate 201 is designed so that an opening 201h through which the coolant passes is formed in the center of the intermediate plate 201, thereby preventing the flow stagnation of the coolant from occurring in a space between the first battery cell stack 120a and the second battery cell stack 120b. That is, an attempt is made to secure the flowability of the coolant and thus increase the cooling performance.

Referring to FIGS. 5 and 9, as described above, the battery cell assembly 100 may include a first sealing assembly 410 and a second sealing assembly 450 that cover the opened both sides of the frame member 200, respectively. The inlet 421 may be formed in the first sealing assembly 410, and the outlet 461 may be formed in the second sealing assembly 450.

As described above, the battery cell 110 according to the present embodiments is a pouch-type battery cell, and may include electrode leads 130 protruding in both directions. The direction between the electrode leads 130 protruding in both directions may be defined as a longitudinal direction of the battery cell 110. The direction parallel to the x-axis may correspond to a longitudinal direction of the battery cell 110. Along this longitudinal direction, the first sealing assembly 410, the first battery cell stack 120a, the intermediate plate 201, the second battery cell stack 120b, and the second sealing assembly 450 may be located in sequence. That is, the coolant flowing in through the inlet 421 formed in the first sealing assembly 410 may pass through the first battery cell stack 120a, the opening 201h of the intermediate plate 201, and the second battery cell stack 120b in sequence and be discharged through the outlet 461 formed in the second sealing assembly 450.

In the battery cell assembly 100 according to the present embodiments, the first busbar assembly 300a electrically connected to the battery cell stack may be located on opened one side of the frame member 200, and the first sealing assembly 410 may be mounted as covering the first busbar assembly 300a. More specifically, the first sealing assembly 410 may cover the first busbar assembly 300a located on one side of the first battery cell stack 120a.

The inlet 421 may be located lower than the center based on the height of the battery cell stack 120. The inlet 421 may be located close to the lower end of the first sealing assembly 410. Specifically, the inlet 421 may be located lower than the center based on the height of the first sealing assembly 410. Here, the height of the battery cell stack 120 or the first sealing assembly 410 means the length in the z-axis direction in the drawing.

Combining the position of the inlet 421 and the position of the outlet 461 together as described above, the inlet 421 may be located lower than the center based on the height of the battery cell stack 120, and the outlet 461 may be located higher than the center based on the height of the battery cell stack 120. That is, the inlet 421 may be located close to the lower part of the first sealing assembly 410, and the outlet 461 may be located close to the upper part of the second sealing assembly 450.

If the inlet 421 is located higher than the center based on the height of the battery cell stack 120, the coolant may flow into the battery cell assembly 100 as if it is falling from a high position, which may cause bubbles to form inside the coolant. Such bubbles become a factor that inhibits the cooling effect.

In addition, if the outlet 461 is located lower than the center based on the height of the battery cell stack 120, the coolant that flows into the battery cell assembly 100 is filled only up to the height of the outlet 461 and then escapes to the outside, so that the inside of the battery cell assembly 100 may not be filled with a sufficient amount of coolant, which may result in a decrease in cooling performance.

Therefore, in order to prevent bubbles from forming in the coolant made to flow in and to fully fill the inside of the battery cell assembly 100 with the coolant, it is preferred that the inlet 421 is located lower than the center based on the height of the battery cell stack 120, and the outlet 461 is located higher than the center based on the height of the battery cell stack 120.

In the embodiments above, expressions indicating directions such as "front," "rear," "left," "right," "up," and "down" have been used. These expressions are used only to facilitate the description, and may vary, for example, depending on the location of a target object or an observer.

One or more battery cell assemblies according to certain embodiments of the present disclosure described above may be mounted together with various control and protection systems such as a battery management system (BMS), a battery disconnect unit (BDU), and a cooling system, to form a battery pack.

The battery assemblies or the battery pack may be applied to various devices, which include, for example, transportation vehicles such as electric bicycles, electric vehicles, and hybrids, and energy storage systems (ESS). However, without being limited thereto, the battery modules or the battery pack may be applied to various devices using secondary batteries.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery cell assembly
110: battery cell
120: battery cell stack
120a: first battery cell stack
120b: second battery cell stack
200: frame member
201: intermediate plate
205: adhesive layer
210: cooling fin
250: compression pad
270: side plate
300a: first busbar assembly
300b: second busbar assembly
400: sealing assembly
500: end plate
201h: opening

## Claims

1. A battery cell assembly comprising:
a battery cell stack including a first battery cell stack and a second battery cell stack in which a plurality of battery cells are stacked respectively;
a frame member that houses the battery cell stack; and
an inlet and an outlet that circulate a coolant into the frame member,
wherein a coolant is flowed into the frame member through the inlet and discharged through the outlet,
wherein the frame member includes an intermediate plate arranged between the first battery cell stack and the second battery cell stack, and
wherein the intermediate plate is formed with at least one opening through which the coolant passes.

2. The battery cell assembly of claim 1,
wherein an adhesive layer is formed on the front and rear surfaces of the intermediate plate, respectively, and
the first battery cell stack and the second battery cell stack are fixed to the inside of the frame member through the adhesive layer respectively.

3. The battery cell assembly of claim 2,
wherein a first busbar assembly is arranged on front and rear surfaces of the first battery cell stack, respectively,
a second busbar assembly is arranged on front and rear surfaces of the second battery cell stack, respectively, and
the first busbar assembly and the second busbar assembly facing the intermediate plate are in contact with the adhesive layer, respectively.

4. The battery cell assembly of claim 1,
wherein the intermediate plate is integrated with the frame member.

5. The battery cell assembly of claim 1,
wherein the intermediate plate is formed in the center of the frame member.

6. The battery cell assembly of claim 1,
wherein the at least one opening is formed in the center of the intermediate plate.

7. The battery cell assembly of claim 1,
wherein the adhesive layer is made of an adhesive composition having insulation properties, and the adhesive composition includes an epoxy resin or polyurethane.

8. The battery cell assembly of claim 1,
wherein the inlet and the outlet are located on opposite sides to each other based on the intermediate plate,
the first battery cell stack is located between the inlet and the intermediate plate, and
the second battery cell stack is located between the outlet and the intermediate plate.

9. The battery cell assembly of claim 8,
wherein the coolant flowing in through the inlet passes through the first battery cell stack, the opening of the intermediate plate and the second battery cell stack in sequence, and is discharged through the outlet.

10. The battery cell assembly of claim 1,
wherein the inlet is located lower than the center based on the height of the battery cell stack, and
the outlet is located higher than the center based on the height of the battery cell stack.

11. The battery cell assembly of claim 1,
wherein the first battery cell stack and the second battery cell stack are arranged along a direction perpendicular to a direction in which the battery cells are stacked in the first battery cell stack or the second battery cell stack.

12. The battery cell assembly of claim 1,
further comprising a first sealing assembly and a second sealing assembly covering opened both sides of the frame member respectively,
wherein the inlet is formed in the first sealing assembly, and the outlet is formed in the second sealing assembly.

13. The battery cell assembly of claim 12,
wherein the inlet is located lower than the center based on the height of the first sealing assembly, and
the outlet is located higher than the center based on the height of the second sealing assembly.

14. The battery cell assembly of claim 12,
wherein each of the battery cells includes electrode leads protruding in both directions, and
when the direction between the electrode leads is defined as a longitudinal direction, the first sealing assembly, the first battery cell stack, the intermediate plate, the second battery cell stack, and the second sealing assembly are sequentially located along the longitudinal direction.

15. The battery cell assembly of claim 1,
wherein the coolant is an insulating oil, and
the coolant is in direct contact with the battery cell stack housed inside the frame member.

16. A battery pack comprising the battery cell assembly of claim 1.
